# DEMANDE DE BREVET EUROPEEN

(11) **EP 0 979 602 A1**
(43) Date de publication de la demande: **16.02.2000**
(21) Numéro de dépôt: 99402044.4
(22) Date de dépôt: 11.08.1999
(51) Int. Cl.: A01G 9/12

(54) **Tuteur pour un précurseur de plante, ainsi qu'un produit horticole et un procédé de culture qui s'y rapportent**

(30) Priorité: 11.08.1998 FR 9810309
(71) Demandeur: Gillet, Roger, 91240 Saint Michel sur Orge (FR); Gaudru, épouse Gillet, Martine, F-91240 Saint Michel sur Orge (Essonne) (FR)
(72) Inventeur: Gillet, Roger, 91240 Saint Michel sur Orge (FR); Gaudru, épouse Gillet, Martine, F-91240 Saint Michel sur Orge (Essonne) (FR)
(74) Mandataire: Pontet, Bernard

(57) **Abrégé**

Le tuteur sert à empêcher des plantes (24) telles que les glaïeuls ou les dahlias de se coucher sur le sol sous l'effet du poids ou des intempéries.

Il est caractérisé en ce qu'il possède un corps de forme tubulaire à la base (3) duquel est adapté à être positionné le précurseur (6) et définissant un conduit (2) en son intérieur ouvert vers le bas pour le développement des racines et ouvert vers le haut pour laisser pénétrer la lumière jusqu'au précurseur et favoriser la photosynthèse de la plante dès sa sortie du précurseur. Une base de la plante ligneuse et beaucoup plus résistante est ainsi naturellement formée.

## Description

La présente invention concerne un tuteur pour un précurseur de plante, en particulier pour un oignon de glaïeul ou un tubercule de dahlia.

La présente invention concerne également un procédé de culture utilisant un tel tuteur.

La présente invention concerne encore un produit horticole préparatoire à la mise en oeuvre du procédé.

Certaines plantes tendent à se coucher sur le sol sous l'effet de leur propre poids et/ou des intempéries. Il est connu d'y remédier avec un tuteur traditionnel consistant en un simple piquet planté dans le sol à côté de la plante, un lien entourant la plante et le piquet à une certaine distance au-dessus du sol. Des tuteurs plus élaborés et plus chers comprennent un cerceau entourant la plante à une certaine hauteur au-dessus du sol. Le cerceau est en général porté par plusieurs pieds plantés dans le sol autour de la plante. Tous les systèmes connus sont inesthétiques et nécessitent une intervention après un certain temps de croissance de la plante et peuvent endommager la plante en imposant à celle-ci une contrainte locale pouvant constituer une zone de pliure sous l'effet du vent. Il est également connu de faire pousser les glaïeuls à travers un grillage placé à une certaine distance au-dessus du sol. On relève le grillage à mesure que les plantes croissent. Ce procédé est fastidieux et son caractère inesthétique empêche son utilisation dans un jardin d'agrément.

On connaît par ailleurs, notamment des documents US 4,348,831 et US 4,791,754, des tuteurs pour des plants de tomates comprenant une portion centrale tubulaire ouverte vers le bas pour le développement des racines et ouverte vers le haut pour développement de la plante sur laquelle est adaptée une collerette pour le support des branches retombantes. Le tuteur est installé une fois le plant sorti de terre, la majeure partie de la portion tubulaire se trouvant hors du sol, destinée au support de la partie verticale du plant.

La constatation qui est à la base de la présente invention est la suivante : certaines plantes, en particulier les glaïeuls ou les dahlias, ont une zone de fragilité à leur base. En l'absence de tuteur, ces plantes se couchent systématiquement par une pliure se formant dans la zone enterrée, de quelques cm de long à la base de la tige et à sa jonction avec le précurseur, la partie aérienne de la tige étant beaucoup plus ligneuse et donc résistante. Parfois encore, c'est le précurseur qui bascule dans le sol, notamment lorsque le sol est particulièrement meuble, par exemple détrempé par une longue période de pluie.

L'idée qui est à la base de la présente invention consiste à renforcer cette zone fragile de la plante.

Suivant l'invention, il est proposé un tuteur pour précurseur de plante, tel qu'un oignon ou un tubercule, comprenant un corps de forme tubulaire destiné à être au moins partiellement enfoui dans le sol et définissant en son intérieur un conduit ouvert vers le bas pour le développement des racines et ouvert vers le haut pour aider le développement de la plante, caractérisé en ce que le corps tubulaire est un moyen pour recevoir à sa base le précurseur de la plante et définir dans le sol, par ledit conduit, un passage libre de terre pour laisser pénétrer la lumière jusqu'au précurseur et favoriser la photosynthèse de la plante dès sa sortie du précurseur.

La majeure partie du tuteur est donc active sous terre. Comme le conduit est libre de terre, la jeune pousse issue du précurseur se rigidifie naturellement car la lumière présente dans le conduit libre de terre provoque la formation de tissus ligneux immédiatement à la sortie du précurseur. De plus, la phototropie venant accélérer la première pousse de la plante, le rendement des cultures s'en voit amélioré, notamment la plante obtenue est plus grande.

Le corps tubulaire du tuteur peut dans un deuxième temps constituer un renfort mécanique de la base de la plante. En outre, le tuteur suivant l'invention aide les personnes non-initiées à choisir la bonne profondeur de plantation pour le précurseur.

Suivant un second aspect de l'invention, le procédé de culture est caractérisé en ce qu'on place le précurseur de plante à la base du corps tubulaire d'un tuteur selon le premier aspect, que l'on enfouit dans le sol de manière à faire dépasser du sol le sommet du corps tubulaire et à laisser le conduit libre de terre.

Ainsi, en pratique, il suffit de laisser dépasser du sol une petite portion de la partie tubulaire du tuteur, pour empêcher la terre de tomber ensuite dans le conduit. Mais l'invention n'exclut pas de prolonger le corps tubulaire vers le haut si cela est souhaité.

Suivant un troisième aspect de l'invention, le produit horticole comprend un précurseur de plante installé dans la base du conduit du corps tubulaire d'un tuteur selon le premier aspect.

Un tel produit horticole peut être commercialisé auprès de l'horticulteur professionnel ou du jardinier amateur, pour qui les opérations de plantation selon le deuxième aspect seront ainsi considérablement simplifiées.

D'autres particularités et avantages de l'invention ressortiront encore de la description ci-après, relative à des exemples non limitatifs.

Aux dessins annexés :
- la figure 1 est une vue en perspective d'un premier mode de réalisation du tuteur selon l'invention ;
- la figure 2 est une vue en coupe axiale du produit horticole selon l'invention, en cours de plantation dans la partie gauche de la figure et à l'issue de l'opération de plantation dans la partie droite de la figure ;
- la figure 3 est une vue de dessous du produit horticole selon la figure 2, avec arrachements ;
- la figure 4 est une vue en coupe axiale de la plante soutenue par le tuteur ;
- la figure 5 est une vue de dessus d'un deuxième mode de réalisation du tuteur ;
- la figure 6 est une vue en perspective et coupe axiale d'un troisième mode de réalisation du tuteur ;
- la figure 7 est une vue du dessus d'un tuteur multiple constituant un quatrième mode de réalisation de l'invention ;
- la figure 8 est une vue de dessus d'un cinquième mode de réalisation du tuteur ;
- la figure 9 est une vue de dessus d'un sixième mode de réalisation du tuteur, destiné à un plant de dahlia ; et
- la figure 10 est une vue en coupe axiale du tuteur de la figure 9.

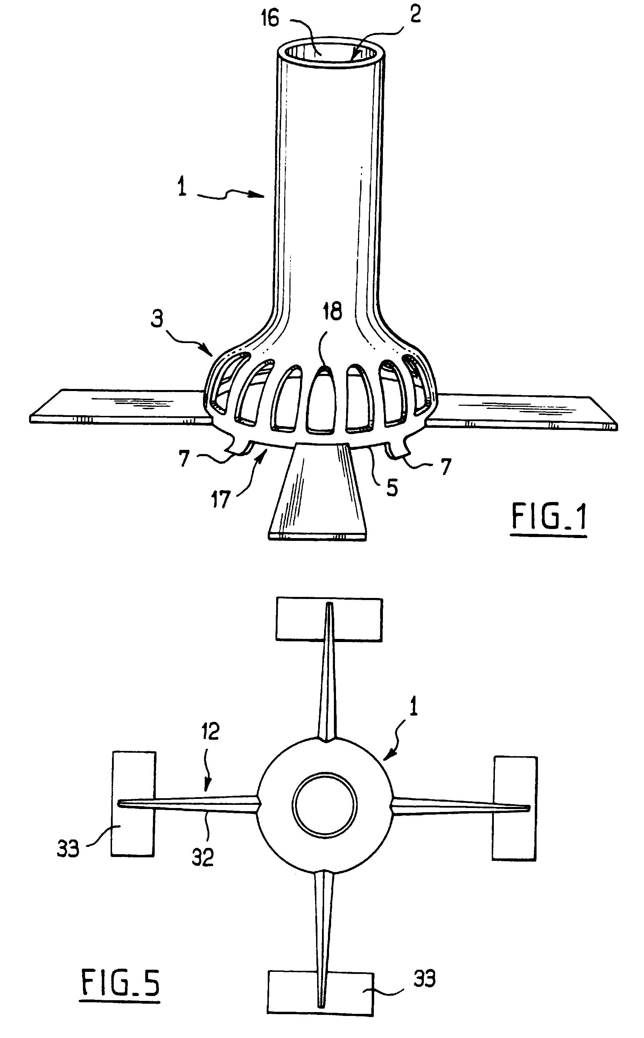

Dans l'exemple représenté à la figure 1, le tuteur comprend un corps tubulaire 1 définissant à son intérieur un conduit 2 qui est de forme générale cylindrique. L'axe du corps tubulaire 1 est vertical en position de service.

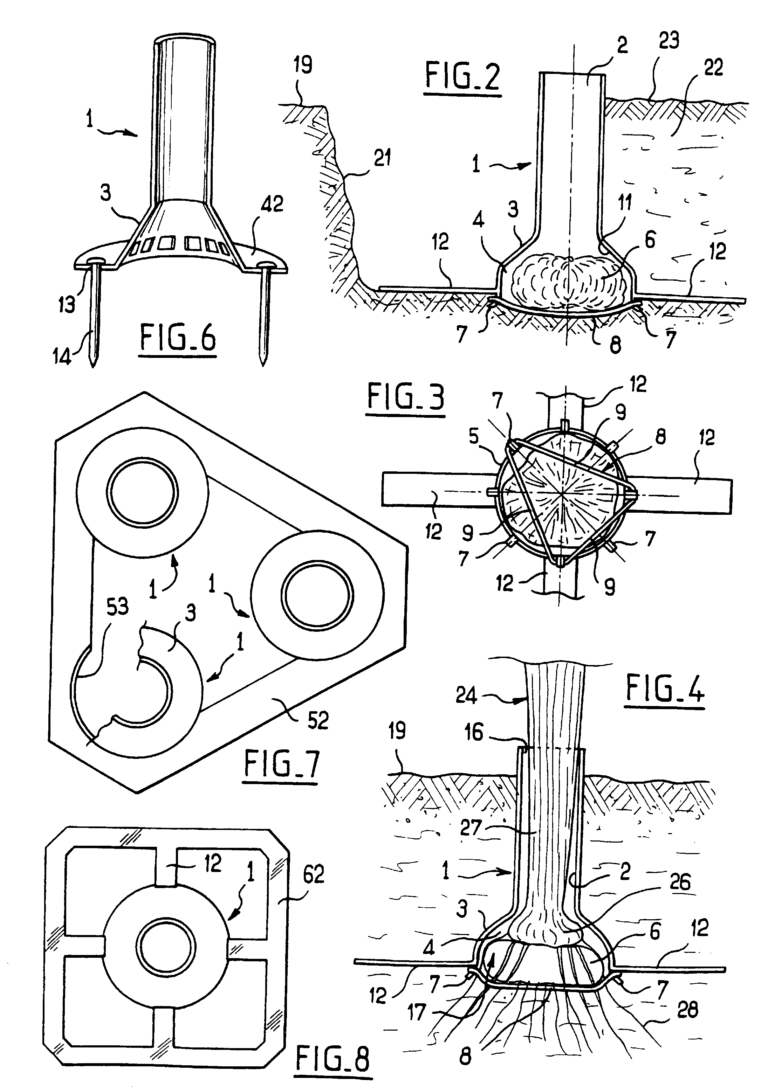

Le corps tubulaire 1 présente une base 3 élargie sensiblement en forme d'entonnoir inversé. A l'intérieur de la base 3, le conduit 2 s'élargit de manière correspondante pour former un logement 4 (figures 2 à 4) destiné à recevoir un précurseur de la plante. Dans l'exemple préféré d'application de l'invention, ce précurseur est un oignon 6 et plus particulièrement un oignon de glaïeul.

Le corps tubulaire 1 est ouvert à son extrémité supérieure 16 et à son extrémité inférieure 17. En outre, le corps 1 présente des fenêtres 18 faisant communiquer le logement 4 avec l'extérieur sur tout le pourtour de la base élargie 3.

La base 3 possède autour de l'ouverture 17 un bord inférieur libre annulaire 5. Ce bord porte des crochets 7 saillant vers le bas et radialement vers l'extérieur, répartis régulièrement autour de l'axe du corps tubulaire 1. Un anneau élastique de retenue 8 passe radialement à l'extérieur de deux ou plusieurs des crochets 7, par exemple trois crochets 7 dans l'exemple de la figure 3. L'anneau 8 présente ainsi des parties 9 qui s'étendent en travers de l'ouverture inférieure de la base 3 pour enfermer l'oignon 6 dans le logement 4 tout en laissant subsister de larges surfaces ouvertes entre ces parties 9.

Plus particulièrement, l'oignon 6 est immobilisé ou sensiblement immobilisé entre l'anneau de retenue 8 et l'épaulement intérieur 11 par lequel le conduit 2 s'élargit pour former le logement 4 (figure 2).

Pour un oignon de glaïeul, il est avantageux que le diamètre intérieur du logement 4 soit d'environ 55 à 65 mm et que le diamètre intérieur du conduit 2 au-dessus de la base 3 soit d'environ 25 à 30 mm. Ainsi, le tuteur et l'oignon maintenu par l'anneau élastique 8 forment ensemble un produit horticole manipulable d'un seul tenant pendant les opérations de plantation.

Des ailes stabilisatrices 12 font saillie radialement vers l'extérieur à partir de la base élargie 3 du corps 1, de préférence à partir du bord inférieur libre de la base 3. Les ailes stabilisatrices 12, destinées à être enfouies dans le sol, aident ainsi à stabiliser le corps tubulaire 1 en position dressée avec son axe vertical.

Le corps tubulaire 1, les ailes stabilisatrices 12 et les crochets 7 peuvent être réalisés d'un seul tenant, en une seule pièce de matière plastique moulée.

On va maintenant exposer le mode d'utilisation et de fonctionnement du tuteur selon l'invention, cette description incluant celle du procédé selon l'invention.

Comme le montre la figure 2, on réalise un produit horticole selon l'invention en plaçant l'oignon 6 dans le logement 3 puis en verrouillant le positionnement de l'oignon 6 au moyen de l'anneau élastique 8. Cette opération peut être effectuée par le jardinier ou l'horticulteur, par exemple juste avant de procéder à la plantation. Mais elle peut aussi être effectuée par le producteur ou le marchand d'oignons, qui commercialise ainsi ses oignons sous la forme du produit horticole selon l'invention comprenant l'oignon et le tuteur associé.

Une fois le produit horticole constitué, on pratique dans le sol 19 (figure 2) une excavation 21 ayant une profondeur de 10 à 15 cm et un diamètre correspondant à l'encombrement radial du tuteur. On place ensuite le produit horticole dans l'excavation 21 de manière que l'extrémité inférieure ouverte de la base 3 et les ailes stabilisatrices 12 reposent sur le fond de l'excavation 21. On comble ensuite l'excavation 21 avec de la terre 22 (partie droite de la figure 2) de manière à former un sol 23 dont le corps tubulaire 1 dépasse de quelques centimètres, par exemple 2 ou 3 cm. On fait en sorte de ne pas mettre de terre dans le conduit tubulaire 2. Ainsi, l'oignon 6 sera bien exposé à la lumière et la photosynthèse pourra avoir lieu dès la sortie de la pousse de l'oignon. La plante formera ainsi une base ligneuse et par conséquent beaucoup plus résistante. On pourra aussi arroser facilement le précurseur à travers le conduit 2, de même que par les fenêtres 18 de la base 3 (figure 1).

Ensuite, comme le montre la figure 4, la plante 24 se développe en formant un oignon secondaire 26 au dessus de l'oignon 6, puis une ou plusieurs tiges 27 à partir de l'oignon secondaire 26, en direction opposée à l'oignon 6. En outre, des racines 28 se forment également.

L'oignon 6 ayant été convenablement orienté dans le logement 4 lors de la confection du produit horticole, on est assuré que l'oignon secondaire 26 se formera au-dessus de l'oignon primaire 6, et que par conséquent les tiges 27 se développeront à travers le corps tubulaire 2 pour émerger à travers l'extrémité ouverte 16 supérieure du corps tubulaire 1. Au contraire, les racines 28 se développent dans le sol à travers l'extrémité inférieure, également ouverte 17, du corps tubulaire 1. L'épaulement tronconique 11, ou plus généralement la forme en entonnoir inversé de la base 3, guide les tiges 27 vers la partie étroite du conduit 2 au début de la croissance de la plante.

Pendant la formation de l'oignon secondaire 26, l'ensemble formé par l'oignon secondaire 26 et l'oignon primaire 6 subit un certain gonflement qui est permis par une tension supplémentaire de l'anneau élastique 8.

De manière surprenante, il a été vérifié par des essais que le tuteur selon l'invention, ainsi que le produit horticole et le procédé de culture associés, permettaient de maintenir un glaïeul en position dressée pendant toute sa période de croissance et de floraison, au cours desquelles il peut atteindre en moyenne 1,60 m de hauteur.

Les exemples des figures 5 à 8 ne seront décrits que pour leurs différences par rapport à celui de la figure 1.

Dans le mode de réalisation de la figure 5, les ailes stabilisatrices 12 comportent chacune un bras 32 de relativement faibles largeur et section transversale, terminé par une pale 33 du côté opposé au corps tubulaire 1. En service, chaque pale 33 s'étend dans un plan sensiblement horizontal. Les pales 33, éloignées de l'axe central du tuteur, offrent une grande résistance à un éventuel basculement du tuteur.

A la figure 5, le corps tubulaire 1 n'est pas représenté en détail, il peut par exemple être semblable à celui de la figure 1 ou encore à celui de la figure 6 qui va maintenant être décrite.

Dans l'exemple de la figure 6, la base élargie 3 du corps 1, est entièrement tronconique au lieu d'avoir comme aux figures 1 à 4 une forme générale cylindrique raccordée à la partie supérieure du corps 1 par un épaulement tronconique 11.

Selon une autre différence, indépendante de la précédente, il n'y a dans l'exemple de la figure 6 qu'une seule aile stabilisatrice 42 qui est en forme de collerette traversée par des trous 13 pour le passage des fiches 14. Avec cette modification, le moindre encombrement radial du tuteur facilite sa fabrication, son stockage, son transport et réduit le diamètre de l'excavation telle que 21 (figure 2) à réaliser lors de la mise en oeuvre du procédé de culture. Le procédé de culture comprend alors une étape consistant à enfoncer les fiches 14 dans le sol à travers les trous 13 juste avant de combler l'excavation. Les fiches 14 assurent au tuteur un complément de stabilité qui compense la faible dimension radiale de l'aile stabilisatrice.

Dans l'exemple de la figure 7, le tuteur comprend plusieurs corps tubulaires 1 disposés aux sommets d'un triangle équilatéral. L'entraxe entre les corps tubulaires correspond à une distance souhaitable pour l'écartement entre deux plans de glaïeuls d'un massif. Les trois corps tubulaires 1 sont réunis d'un seul tenant par un cadre de forme générale triangulaire 52 qui est de configuration aplatie dans un plan perpendiculaire à l'axe des corps tubulaires 1. Le cadre 52 réunit les corps 1 par leur base.

A la figure 7, un arrachement visualise que le cadre 52 est échancré en 53 autour des bases élargies 3 des corps tubulaires 1 pour dégager complètement l'ouverture inférieure de celles-ci.

En service, le cadre 52 est enfoui dans le sol de la plantation et forme aile stabilisatrice pour les trois corps tubulaires 1 simultanément. En outre, dans cette réalisation, les corps tubulaires 1 se stabilisent mutuellement. Il est en général inutile de renforcer le positionnement de ce tuteur par des fiches telles que 14 de la figures 6. Par conséquent aucun trou n'est représenté à travers le cadre 52.

Dans le mode de réalisation de la figure 8, un cadre 62, de forme générale carrée, réunit les extrémités des ailes stabilisatrices 12 qui ne comportent pas de trous 13 pour des fiches telles que 14. Le cadre 62 augmente considérablement l'aire des moyens stabilisateurs 12, 62 qui sont enfouis dans le sol pour stabiliser le tuteur, d'autant plus que tous les points du cadre 62 sont relativement éloignés de l'axe central du tuteur.

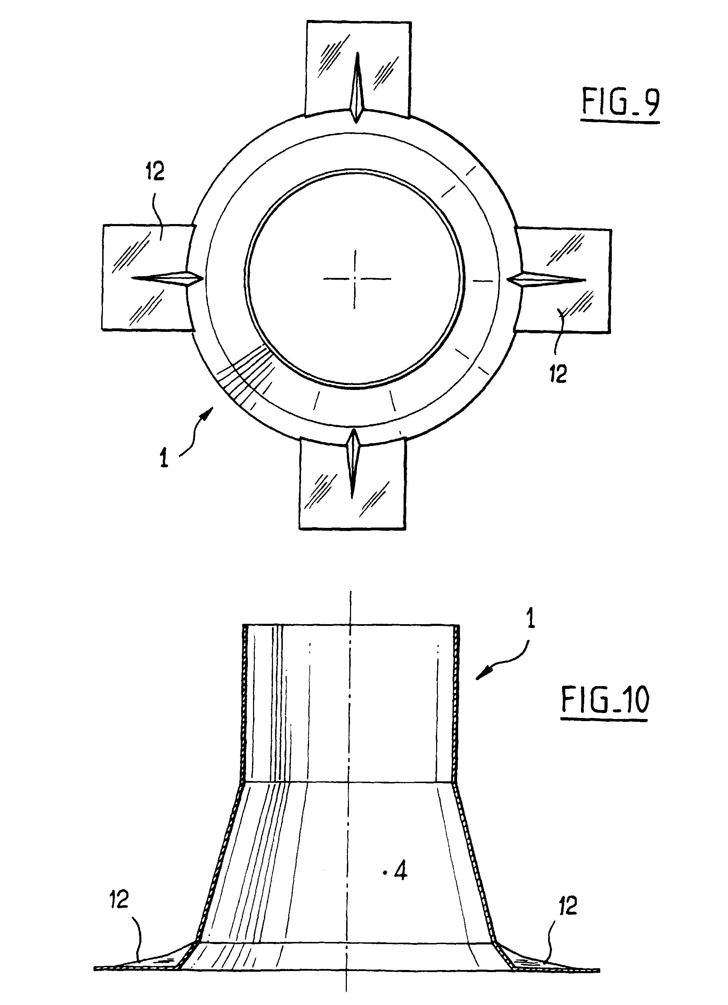

Dans l'exemple représenté aux figures 9 et 10, le tuteur est destiné à un plant de dahlia. Le corps tubulaire 1 possède une partie supérieure cylindrique ayant un diamètre intérieur de par exemple 100mm, et une partie inférieure qui s'élargit en cône jusqu'à un diamètre d'ouverture inférieure d'environ 150mm par exemple éventuellement jusqu'à environ 200mm. La zone conique forme logement 4 pour les tubercules de dahlia, la zone cylindrique sert de guide pour les multiples pousses de dahlia. La base du corps tubulaire 1 porte des stabilisateurs 12 dirigés radialement vers l'extérieur, répartis angulairement. La hauteur totale du tuteur peut être de l'ordre de 150 à 200mm. Ce tuteur s'utilise sensiblement comme décrit en référence à la figure 2. En particulier, le tuteur se met en terre en même temps que les tubercules constituant le précurseur du plant, l'intérieur du corps tubulaire étant maintenu exempt de terre et le sommet du corps tubulaire dépassant de la surface du sol.

Bien entendu, l'invention n'est pas limitée aux exemples décrits et représentés et des aménagements peuvent être apportés à ces exemples sans sortir du cadre de l'invention.

Ainsi, dans l'exemple des figures 1 à 4, on pourrait omettre les crochets 7 et l'anneau élastique 8, ou bien omettre l'anneau 8 même si les crochets 7 sont prévus. Dans ce cas, le procédé de culture consiste à mettre l'oignon sur le fond de l'excavation dans une position telle que l'oignon secondaire se formera sur le dessus, puis de positionner le tuteur selon l'invention de manière qu'il coiffe l'oignon, puis à reboucher l'excavation comme cela a été décrit en référence à la partie droite de la figure 2. Même dans les exemples autres que celui de la figure 6, les ailes stabilisatrices telles que 12 ou cadres 52, 62 peuvent être munis d'orifices tels que 13 permettant d'utiliser des fiches telles que 14, notamment en cas de sol très meuble.

Au lieu de prévoir un anneau élastique 8, on pourrait employer un opercule ajouré qui serait par exemple encliquetable sur la base du corps tubulaire 1.

Dans l'exemple de la figure 7, on pourrait n'avoir que deux corps tubulaires 1 réunis par un cadre commun, ou au contraire plus de trois qui pourraient être disposés en carré, en losange etc. Il est en particulier envisagé pour les professionnels de la production des bouquets de glaïeuls, un véritable plateau regroupant plusieurs dizaines de corps tubulaires, par exemple sur plusieurs rangées.

Le corps tubulaire n'est pas nécessairement élargi à sa base si le tuteur est destiné à la culture de plantes dont le précurseur est par exemple constitué par une graine, un jeune plant, ou autre corps végétal de diamètre réduit.

## Revendications

1. Tuteur pour précurseur de plante, tel qu'un oignon ou un tubercule, comprenant un corps (1) de forme tubulaire destiné à être au moins partiellement enfoui dans le sol et définissant en son intérieur un conduit (2) ouvert vers le bas pour le développement des racines et ouvert vers le haut pour aider le développement de la plante (24), caractérisé en ce que le corps tubulaire (1) est un moyen pour recevoir à sa base (3) le précurseur (6) de la plante et définir dans le sol, par ledit conduit, un passage libre de terre pour laisser pénétrer la lumière jusqu'au précurseur et favoriser la photosynthèse de la plante dès sa sortie du précurseur.

2. Tuteur selon la revendication 1, caractérisé en ce que la base (3) du conduit est élargie pour former un logement (4) destiné à recevoir le précurseur (6).

3. Tuteur selon la revendication 2, caractérisé en ce que la base (3) est élargie en forme générale d'entonnoir inversé.

4. Tuteur selon l'une des revendications 1 à 3, caractérisé en ce qu'il est destiné à la culture des glaïeuls, en ce que le conduit (2) a un diamètre d'environ 25 à 30 mm et une base élargie (3) a un diamètre intérieur d'environ 55 à 65 mm.

5. Tuteur selon l'une des revendications 1 à 3, caractérisé en ce qu'il est destiné à la culture des dahlias, en ce que le conduit (2) a un diamètre d'environ 100mm et une base élargie (3) a un diamètre intérieur d'environ 150 à 200mm.

6. Tuteur selon l'une des revendications 1 à 5, caractérisé en ce que la base (3) du corps (1) est associée à des moyens (7, 8) pour retenir un précurseur (6) de la plante dans la base du corps avant et/ou pendant l'opération de plantation.

7. Tuteur selon la revendication 6, caractérisé en ce que les moyens de retenue (8) sont élastiques pour permettre une expansion du précurseur (6) pendant la croissance de la plante.

8. Tuteur selon l'une des revendications 1 à 7, caractérisé en ce que la base (3) du corps (1) est ajourée latéralement (18).

9. Tuteur selon l'une des revendications 1 à 8, caractérisé en ce qu'il comprend des ailes stabilisatrices (12, 32, 42, 52, 62) saillant radialement vers l'extérieur par rapport au corps (1), destinées à être enfouies sous terre.

10. Tuteur selon l'une des revendications 1 à 8, caractérisé en ce qu'il comprend plusieurs tels corps tubulaires (1), reliés entre eux avec un espacement convenable entre eux, pour soutenir plusieurs plantes, par un moyen formant de préférence aile stabilisatrice (52) destinée à être enfouie sous terre.

11. Tuteur selon l'une des revendications 1 à 10, caractérisé en ce qu'il comprend en partie basse au moins un orifice (13) pour une fiche (14) destinée à être enfoncée dans le sol.

12. Procédé de culture caractérisé en ce qu'on place un précurseur (6) de plante (24) à la base (3) du corps tubulaire (1) d'un tuteur selon l'une des revendications 1 à 11, que l'on enfouit dans le sol (22) de manière à faire dépasser du sol le sommet du corps tubulaire (1) et à laisser le conduit (2) libre de terre.

13. Procédé selon la revendication 12, caractérisé en ce qu'avant la plantation on enferme le précurseur (6) dans la base (3) du corps tubulaire (1), de façon à pouvoir manipuler pendant les opérations de plantation simultanément le précurseur et le tuteur.

14. Procédé selon l'une des revendications 12 ou 13, caractérisé en ce qu'il est appliqué à la culture des glaïeuls.

15. Produit horticole comprenant un précurseur (6) de plante installé dans la base (3) du conduit (2) du corps tubulaire (1) d'un tuteur selon l'une des revendication 1 à 11.

16. Produit horticole selon la revendication 15, caractérisé en ce que le précurseur de plante est un oignon (6) de glaïeul ou plante analogue (24).

17. Produit horticole selon la revendication 15, caractérisé en ce que le précurseur de plante est un tubercule de dahlia.

18. Produit horticole selon l'une des revendications 15 à 17, caractérisé en ce que le précurseur (6) est emprisonné dans la base élargie (3) du conduit (2) par un dispositif de retenue (8).
